# EUROPEAN PATENT SPECIFICATION

(11) **EP 1 277 812 B1**
(45) Date of publication and mention of the grant of the patent: **10.12.2008**
(21) Application number: 01902699.6
(22) Date of filing: 31.01.2001
(51) Int. Cl.: C09D 11/18, B43K 7/00

(54) **OIL-BASED INK COMPOSITION AND BALLPOINT PEN USING THE SAME**
AUF ÖL BASIERENDE TINTENZUSAMMENSETZUNG SOWIE DIESE ZUSAMMENSETZUNG ENTHALTENDER KUGELSCHREIBER
COMPOSITION D'ENCRE A BASE D'HUILE ET STYLO A BILLE CONTENANT CETTE ENCRE

(30) Priority: 02.02.2000 JP 2000025673; 03.04.2000 JP 2000101059
(43) Date of publication of application: 22.01.2003
(73) Proprietor: MITSUBISHI PENCIL KABUSHIKI KAISHA, Shinagawa-ku, Tokyo 140-8537 (JP)
(72) Inventor: SUZUKI, Susumu, Gunma 375-0003 (JP); TAKAYANAGI, Toshiaki, Kanagawa 221-0014 (JP)
(74) Representative: Luderschmidt, Schüler & Partner
(86) International application number: PCT/JP2001/000659
(87) International publication number: WO 2001/057147

(56) References cited:
- JP-A- 8 134 393
- JP-A- 59 155 475

## Description

### Technical Field

### Field of the Invention

The present invention relates to an oil-based ink composition of a chromatic color, and particularly to an oil-based ink composition of a chromatic color in which a dye and an organic pigment are used in combination as a coloring material and which has excellent stability with the passage of time and is suited to a ballpoint pen, and a ballpoint pen using the same.

### Related Art

Oil-based ballpoint pen inks in which butyral resins are used as a pigment dispersant and/or viscosity-controlling agent are disclosed in, for example, Japanese Patent Publication No. Sho 57-43185, Japanese Patent Application Laid-Open No. Hei 6-192612, Japanese Patent Application Laid-Open No. Hei 6-248217, Japanese Patent Application Laid-Open No. Hei 6-313144, Japanese Patent Application Laid-Open No. Hei 6-313145, Japanese Patent Application Laid-Open No. Hei 7-70504, Japanese Patent Application Laid-Open No. Hei 8-41407, Japanese Patent Application Laid-Open No. Hei 8-41408, Japanese Patent Application Laid-Open No. Hei 8-120206, Japanese Patent Application Laid-Open No. Hei 8-134393, Japanese Patent Application Laid-Open No. Hei 9-78021 and Japanese Patent Application Laid-Open No. Hei 10-60356.

In these gazettes, however, nothing but cases where only dyes or pigments are used as coloring materials is given as examples thereof in many cases. Further, it is described in the specifications that dyes and pigments can be used in combination, but problems caused when combining dyes with organic pigments are not referred to in the specifications. Thus, it may be believed that alcohol-soluble type dyes having any structure could be used as well in a combined use formulation of dyes and organic pigments. However, in an oil-based ink composition of a chromatic color comprising at least a butyral resin, the problem in that the stability with the passage of time is short is caused when dyes are used in combination with organic pigments.

The advantage of using dyes in combination with organic pigments resides in the point that problems shown below each of which is less liable to be overcome by using alone can readily be solved by making the best use of the advantages brought about when both of them are used. For example, if only dyes are used, lines drawn on paper are a little inferior in drawn line fastness in many cases such that they are disappeared by elution or decoloration with alcohol base solvents (alcohol resistance) and oxidation-reduction agents (chemical resistance) or they are discolored or decolored in a short period of time when exposed to sunlight (light fastness). Further, metal-containing dyes containing in a dye skeleton chromium, which is heavy metal, have to be used in large quantities in order to obtain a good drawn line fastness, particularly a good light fastness, and therefore there may be caused an environmental problem in that chromium is discharged, though in a trace amount, to the environment through the disposal by incineration.

On the other hand, if only organic pigments are used and are added to an ink in an amount to be sufficient for purposes of obtaining practically satisfactory drawn line intensity, the stability with the passage of time is inferior and incapability of writing is caused in a very short period of time and it is practically difficult to industrially produce a dispersed liquid having a high concentration of an organic pigment, so that it is disadvantageous in terms of the cost. On the other hand, when priority is put on the stability with the passage of time, a sufficiently large amount of a pigment is not contained in an ink, so that the drawn lines are pale in color and do not stand practical use in many cases. It is notably observed particularly in a cold color•achromatic color type such as black and blue.

Next, the facts that dispersibility of a pigment and stability of an ink are elevated and that the writing touch is improved are given as advantages obtained when a butyral resin is used as a pigment dispersant and viscosity-controlling agent. In particular, the effect thereof is markedly shown in terms of an improvement in dispersibility of an organic pigment and stability of an ink. When dispersion is brought about by other resins or surfactants, the sufficiently high dispersibility is not obtained or even if it dispersion is brought about in the beginning, the stability with the passage of time is short, and when a lubricant, a rust preventive and a viscoelasticity-providing agent which are required for a ballpoint pen are added, the balance in formulation of ink is broken in many cases. On the other hand, a butyral resin provides a dispersed liquid which satisfies all of those described above.

In light of the conventional problems described above, the present invention intends to solve them, and an object of the present invention is to provide an oil-based ink composition of a chromatic color which is excellent in stability with the passage of time in a combined use formulation of a dye and an organic pigment when a butyral resin is used as a pigment dispersant and viscosity-controlling agent, and a ballpoint pen using the same.

### Disclosure of the Invention

Intensive investigations repeated by the present inventors in order to solve the problems described above have resulted in finding that the object described above can be achieved when a dye used as a colorant has some specific structure, and thus the present invention has come to completed.

That is, the present invention comprises:
(1) an oil-based ink composition of a chromatic color comprising at least a colorant comprising a halochromic dye of a basic dye and an organic acid, an organic pigment, a butyral resin and an organic solvent, and
(2) a ballpoint pen characterized by being filled therein with the oil-based ink composition of a chromatic color as described in the above item (1).

In the present invention described above, the chromatic color means any color excluding achromatic colors such as black and white.

It is not certain why excellent stability with the passage of time is obtained when an organic pigment is used in combination with a halochromic dye of a basic dye and an organic acid, and a butyral resin is added as a pigment dispersant and viscosity-controlling agent unlike when using other alcohol-soluble type dyes other than the above dyes. A butyral resin has an OH group of PVA in the molecular chain since it is a condensation product of butyl aldehyde and PVA, and it is estimated that this part causes some reaction with an acidic component of the alcohol-soluble type dyes in the case of the other alcohol-soluble type dyes. That is, it is considered that when containing an organic acid having a relatively small molecule as an acidic component as is the case with the halochromic dye of a basic dye and an organic acid according to the present invention, an effect thereof exerted on solubility of a butyral resin is small even after the reaction is advanced. On the other hand, it is considered that when containing an acid dye having a large molecular chain as an acidic component as is the case with the other alcohol-soluble type dyes, an adverse effect such as a reduction in solubility of a butyral resin is exerted. Accordingly, when using a halochromic dye of a basic dye and an organic acid, the good stability with the passage of time is obtained even if a butyral resin is present as a pigment dispersant and viscosity-controlling agent in an ink unlike when using the other alcohol-soluble type dyes. Accordingly, alcohol-soluble type dyes which cause deterioration in stability with the passage of time are not preferably blended with the oil-based ink composition of the present invention.

### Best Mode for Carrying Out the Invention

The embodiment of the present invention shall be explained below in details.

The dye used in the present invention is a halochromic dye of a basic dye and an organic acid.

The examples thereof include Aizen Spilon Yellow C-2GH, Aizen Spilon Yellow C-GNH, Aizen Spilon Red C-GH, Aizen Spilon Red C-BH, Aizen Spilon Violet C-RH, Aizen Spilon Blue C-RH, Aizen S.B.N Blue 701, Valifast Red 1360 and Valifast Yellow 1110. These dyes each may be used alone or in a mixture of two or more kinds thereof. These halochromic dyes of basic dyes and organic acids are added preferably in a range of 5 to 40 % by weight based on the total weight of the ink composition.

Various pigments can be used as the organic pigment used for the ink composition of the present invention and include, for example, organic pigments such as azo lakes, insoluble azo pigments, chelating azo pigments, phthalocyanine pigments, anthraquinone pigments, quinacridone pigments, dye lakes, nitro pigments, nitroso pigments, condensed azo pigments, isoindolinone, quinacridone, diketopyrrolopyrote and anthraquinone.

To explain more specifically, various blue pigments can be used for the organic pigment as a blue colorant and include, for example, C. I. Pigment Blue 15, 15:1, 15:2, 15:3, 15:4, 15:6, 16, 17, 28, 29, 36 and 60, and such pigments may be subjected to surface treatment with surfactants in the production steps thereof. In particular, the specific examples of the blue pigment include pigments such as Graphtol Blue 2GLS, Sandorin Blue RL and Sandorin Blue 91052 manufactured by Clariant Co., Ltd., Lutetiacyanine CD530 manufactured by Fancdor Co., Ltd., Palomar Blue B4806 and Palomar Blue B4707 manufactured by Bayer Co., Ltd., Endurophtal Blue BT-788D and Endurophtal Blue BT-729D manufactured by Worlee Co., Ltd., Phtalocyanine Blue RS1517C manufactured by Cappelle Co., Ltd., Heliogen Blue L6920, Heliogen Blue L6875F, Heliogen Blue L6901F, Heliogen Blue L6905F, Heliogen Blue L6975F, Heliogen Blue 6989F, Heliogen Blue L7072D, Heliogen Blue L7080, Heliogen Blue L7101F and Heliogen Blue L6700F manufactured by BASF Co., Ltd., Monastral Blue FBN, Monastral Blue CSN, Monastral Blue FNX and Mondite Blue RL manufactured by Zeneca Co., Ltd., Catulia Cyanine L.PS and Catulia Cyanine L.JS manufactured by Francolor Co., Ltd., Cyanine Blue A-1700, Cyanine Blue B-7000, Cyanine Blue B-7800 and Cyanine Blue B-8000 manufactured by Woo Sung Co., Ltd., Sunfast Blue 249-1282 manufactured by Sun Co., Ltd., Hostaperm Blue BLF and Renol Blue A2RE manufactured by Hoechst Co., Ltd., Irgalite Blue GLNF, Irgalite Blue GLVD, Irgalite Blue ATC and Microlith Blue 4G-A manufactured by Ciba Geigy Co., Ltd., Sovereign Blue 385, Holland Blue 212, Kingfisher Blue 211 and Olympic Blue 190 manufactured by Shepherd Co., Ltd., Ultramarine Blue manufactured by Luh Co., Ltd., Blue EP37 and Chromofine Blue 4920 manufactured by Dai Color Italy Co., Ltd., Heucosine Blue G1737, Heucosine Blue HS-5000 and Lackecht Blue G1737 manufactured by Heubach Co., Ltd., Kenalake LFBRX manufactured by Kenalake Co., Ltd., Cromophtal Blue A3R and Microlith Blue 4G-WA manufactured by Ciba Specialty Chemicals Co., Ltd., Chromofine Blue 4930, Chromofine Blue 5188 and Chromofine Blue SR5020 manufactured by Dainichiseika Color & Chemicals MFG Co., Ltd., Fastogen Blue 5030L, Fastogen Blue 5420SD, Fastogen Blue 5502, Fastogen Blue TGR-F and Fastogen Blue EP-7 manufactured by Dainippon Ink & Chemicals, Inc., and Cyanine Blue G-134, Cyanine Blue SAS, Cyanine Blue KRS and Cyanine Blue 4033 manufactured by Sanyo Color Works, Ltd.

Various red pigments can be used for the organic pigment as a red colorant and include, for example, C. I. Pigment Red 17, 144, 166, 170, 177, 202, 214, 220 and 254, and such pigments may be subjected to surface treatment with surfactants in the production steps thereof. Specific brand names which are available on the market include pigments such as Irgazin DPP Red BO, Irgazin DPP Red BTR, Chromophtal DPP Red BO, Chromophtal DPP Red BP, Chromophtal DPP Red DPP, Chromophtal Red A 2B, Chromophtal Red A 3B, Chromophtal Scarlet R, Chromophtal Scarlet RN, Chromophtal Scarlet BR, Chromophtal Red BRN and Cinquasia Magenta RT-235D manufactured by Ciba Specialty Chemicals Co., Ltd., Dainichi Fast Poppy Red G and Dainichi Fast Poppy Red R manufactured by Dainichiseika Color & Chemicals MFG Co., Ltd., Bayerrox Red 110M, Bayerrox Red 120MN and Bayerrox Red 130M manufactured by Bayer Co., Ltd., Toluidine Red G0335C, Toluidine Red RN0333C, Bonitol Red BM, Bonitol Red 4844C, Lysopac Red 4841C, Lysopac Red 7030C, Cappoxyt Red 4435B, Cappoxyt Red 4437B, Mineral Orange Thiosol GL, Mineral Orange Thiosol G, Mineral Orange Solipur GH and Mineral Red Solipur 3BH manufactured by Cappelle Co., Ltd., Copperas Red R9998 manufactured by Hercos Co., Ltd., Sicored L3750, Lithol Fast Scarlet L4300, Lithol Fast Maroon L4763, Sicoflush-P-Maroon 4763, Paliogen Redviolet L5080, Sicotrans Red L2817, Sicomin Red L3025, Sicomin Red L3230s and Sico Fast Scarlet L4252 manufactured by BASF Co., Ltd., Heucotron Red 230, Paliogen Red 3880HD, Paliogen Red L4210 and Paliogen L3920 manufactured by Heubach Co., Ltd., Irgalite Red 3RS manufactured by Ciba Geigy Co., Ltd., Toluidine Red L, Toluidine Red K, Bon Red SR, Bon Red 3M, Bon Red MP, Fast Bordeaux C, Lake Red C-500, Lake red C-900 and Fast Red FGR manufactured by Woo Sung Co., Ltd., Novoperm Red Violet MRSnew, Permanent Bordeaux FGR, Permanent Red FGR70, Hostaperm Rosa E and Novoperm Reel F3RK70 manufactured by Hoechst Co., Ltd., Quindo Magenta RV6832 manufactured by Miles Co., Ltd., Perrindo Maroon R6422 manufactured by Bayer Mobay Co., Ltd., and Graphtol Red 5BLS manufactured by Sandoz Co., Ltd.

Various yellow pigments can be used for the organic pigment as a yellow colorant and include, for example, C. I. Pigment Yellow 1, 3, 12, 13, 14, 16, 17, 55, 81, 83, 74, 93, 94, 95, 97, 109, 110, 120, 128, 138, 147, 154, 155, 167, 185 and 191, and such pigments may be subjected to surface treatment with surfactants in the production steps thereof. Specific examples thereof include pigments such as Paliotol Yellow 2140HD, Sicopal Yellow L1110, Sicotan Yellow L1912, Sicomin Yellow L1622, Sicomin Yellow L1630S, Sicomin Yellow L1635S, Sicotrans Yellow L1916, Sico Yellow 1252HD, Paliogen Yellow L1482, Paliogen Yellow L1560, Paliotol Yellow D1155 and Paliotol Yellow L0960HD manufactured by BASF Co., Ltd., Horna Chrome Yellow GMX AX-15, Horna Chrome Yellow GMXAH-35, Horna Chrome Yellow GU-15-SQ, Irgazin Yellow GO, Irgazin Yellow 2RLT, Irgazin Yellow 3RLTN, Irgazin Yellow 5GLT and Irgazin Yellow 2GLTE manufactured by Ciba Geigy Co., Ltd., Bayferrox 915, Bayferrox 920, Bayferrox 3420, Bayferrox 3910 and Bayferrox 3920 manufactured by Bayer Co., Ltd., Novoperm Yellow H2G, Hostaperm Yellow H4G, Hostaperm Yellow H3G, Hostaperm Yellow H6G, Novoperm Yellow F2G and Novoperm Yellow HR70 manufactured by Hoechst Co., Ltd., Pigment Yellow 1425, Pigment Yellow 1450, Pigment Yellow 1710, Pigment Yellow 1711, Pigment Yellow 1707, Pigment Yellow 1717, Pigment Yellow 8104 and Light Fast Pigment Yellow R manufactured by Sanyo Color Works, Ltd., Seika Fast Yellow 10HG, Seika Fast Yellow A-3, Seika Fast Yellow 2035, Seika Fast Yellow 2054, Seika Fast Yellow 2200, Seika Fast Yellow 2270, Seika Fast Yellow 2300, Seika Fast Yellow 2400(B), Seika Fast Yellow 2500, Seika Fast Yellow 2600, Seika Fast Yellow 2700(B), Seika Fast Yellow 2770 and Seika Fast Yellow ZAY-260 manufactured by Dainichiseika Color & Chemicals MFG Co., Ltd., and Sandrin Yellow 4G, PV Fast Yellow HGR, PV Fast Yellow H2G-01, Novoperm Yellow FGL, Novoperm Yellow H10G01, Hansa Yellow 10G and Permanent Yellow NCG manufactured by Clariant Co., Ltd.

Various green pigments can be used for the organic pigment as a green colorant and include, for example, C. I. Pigment Green 7, 17, 36, 50 and 70, and such pigments may be subjected to surface treatment with surfactants in the production steps thereof. Specific examples thereof include pigments such as Chromofine Cyanine Green 2GN, Chromofine Cyanine Green 5301, Chromofine Cyanine Green 2G0, Dainichi Cyanine Green 537, Dainichi Cyanine Green FG, Dainichi Cyanine Green FGH and Chromofine Green 5370 manufactured by Dainippon Ink & Chemicals, Inc., Fastogen Green 5005, Fastogen Green 5710, Fastogen Green B, Fastogen Green S, Fastogen Green SF, Fastogen Green S0 and Fastogen Green 2YK manufactured by Dainichiseika Color & Chemicals MFG Co., Ltd., Heliogen Green 8680, Heliogen Green 8681k, Heliogen Green 8682T, Heliogen Green 8730, Heliogen Green 8730K, Heliogen Green K 8730, Heliogen Green L 8730, Heliogen Green L 9140, Heliogen Green 9360, Heliogen Green K9360, Heliogen Green L 9361, Heliogen Green L 9140, Heliogen Green A, Heliogen Green GNA, Heliogen Green G, Heliogen Green GA, Heliogen Green GN, Heliogen Green GTA, Heliogen Green GV, Heliogen Green GWS, Heliogen Green 6G, Heliogen Green 6GA, Heliogen Green 8GA, Fastogen Green MY, Fastogen Green YCN and Helio Fast Green GT manufactured by BASF Co., Ltd., Iragalite Fast Brilliant Green 3GL, Iragalite Fast Brilliant Green GL, Iragalite Green GLN and Iragalite Green 6G manufactured by Ciba Specialty Chemicals Co., Ltd., Liofast Green B237, Lionol Green B 201, Lionol Green Y 102, Lionol Green YS 07, Lionol Green 2Y301, Lionol Green 2YS and Lionol Green 6YK and Lionol Green 6YKPCN manufactured by Toyo Ink MFG. Co., Ltd., Polymo Green FBH, Polymo Green FGH, Polymo Green 6G, Polymo Green G, Polymo Green GN and Polymo Green GN 500 manufactured by Polymon Developments Ltd., and Sanyo Cyanine Green, Sanyo Phthalocyanine Green F6G, Sanyo Phthalocyanine Green FB, Sanyo Phthalocyanine Green FB Pure, SAX, SAX (pigment) and Sanyo Phthalocyanine Green 6YS manufactured by Sanyo Color Works, Ltd.

These organic pigments each may be used alone or in a mixture of two or more kinds thereof. A blending amount of the coloring materials of these dyes and organic pigments in terms of the total of the dyes and the pigments falls preferably in a range of 5 to 60 % by weight based on the total weight of the ink composition, and a blending amount of the organic pigments is preferably 30 % by weight or less based on the total weight of the ink. If a blending amount of the coloring material is less than 5 % by weight, intensity of the drawn lines in writing is small and is not practical. On the other hand, if it exceeds 60 % by weight, loss of the solvent due to volatilization causes a large problem in the stability with the passage of time deriving from a rise in the viscosity and a shortage in the solubility.

An organic solvent is used for the ink composition of a chromatic color of the present invention in order to dissolve or disperse the colorant described above. In this case, used for the organic solvent is a solvent used for a conventional oil-based ink for a ballpoint pen, that is, a solvent which dissolves or disperses the colorant described above and which has a relatively high boiling point. Such solvents include, for example, benzyl alcohol, phenoxyethanol, Carbitols and Cellosolves. They may be used alone or in a mixture of two or more kinds thereof. A blending amount thereof falls preferably in a range of 20 to 70 % by weight based on the total amount of the composition.

In this case, if it is 20 % by weight or less, it is not preferred in terms of solubility of the colorant and the others added. On the other hand, if it is 70 % by weight or more, it is not preferred in terms of a shortage in the intensity deriving from a shortage in the colorant contained.

In the present invention, a butyral resin is used as a dispersant and viscosity-controlling agent for the organic pigments.

The butyral resin includes Mowital B20H, B30B, B30H, B60T, B60H, B60HH, B70H and B20H manufactured by Hoechst Co., Ltd., S-leck B, BH-3, BL-1, BL-2, BL-L, BL-S, BM-1, BM-2, BM-5, BM-S and BX-L manufactured by Sekisui Chemical Co., Ltd. and Denka Butyral #2000-L, #3000-1, #3000-2, #3000-3, #3000-4, #3000-K, #5000-A and #6000-C manufactured by Denki Kagaku Kogyo Kabushiki Kaisha.

Further, the other resins can be added to the ink composition of the present invention as a viscosity-controlling agent using in combination with the butyral resin, and capable of being given as the examples thereof are resins used for a conventional oil-based ink composition for a ballpoint pen, for example, ketone resins, acetophenone resins, sulfamide resins, maleic resins, ester gums, xylene resins, alkyd resins, phenol resins, rosin resins, polyvinylpyrrolidone resins and modified resins thereof. These resins may be used alone or in a mixture of two or more kinds thereof as long as they are used in combination with the butyral resin. A content of these resins is 5 to 30 % by weight based on the total ink composition. If it is 5 % by weight or less, the viscosity of a required lowest possible limit is not obtained, and therefore it is not preferred. On the other hand, if it is 30 % by weight or more, the resulting viscosity is elevated too high, and therefore it is not preferred either.

Capable of being added, if necessary, to the ink composition of the present invention are, in addition to the essential components described above, the other additives used for a conventional oil-based ink for a ballpoint pen, for example, fatty acids, phosphoric acid ester base lubricants, surfactants, corrosion preventives, antioxidants and lubricating oils. The ink composition of the present invention can suitably be used for ballpoint pens, fountain pens, felt-tip pens and marking pens.

In particular, the ballpoint pen of the present invention is preferably assembled into a ballpoint pen after filling the oil-based ink composition into a refill having a polypropylene tube and a stainless tip (a ball is made of hard metal).

### Examples

The present invention shall be explained below in further details with reference to examples, comparative examples and test examples in the present invention, but the present invention shall by no means be restricted by these examples.

### Examples 1 to 4 and Comparative Examples 1 to 6

Produced by the following production process were oil-based ink compositions in which combined were the respective ink components comprising colorants comprising various organic pigments and dyes, solvents, resins and lubricants.

In producing the ink compositions, the pigments were first dispersed by a well known method, for example, by means of a ball mill or a three roll mill and transferred into a vessel equipped with a reflux condenser and a stirrer, and then the other components were added thereto and stirred at 60°C for 10 hours. Impurities were removed by pressure filtration to prepare oil-based ink compositions of Examples 1 to 4 and Comparative Examples 1 to 6 shown in Table 1. Numerical values in the compositions shown in Table 1 show parts by weight.

**Table 1**

| Raw material name | | | Example | | | | Comparative Example | | | | | |
|---|---|---|---|---|---|---|---|---|---|---|---|---|
| | | | 1 | 2 | 3 | 4 | 1 | 2 | 3 | 4 | 5 | 6 |
| Colorant | Pigment | C.I. Pigment Red 254 | 10.0 | | | | | 10.0 | | | | 10.0 |
| | | C.I. Pigment Red 170 | | 8.0 | | | | | | | | |
| | | C.I. Pigment Blue 60 | | | 8.0 | 8.0 | | | 8.0 | | 10.0 | |
| | Halochromic dye of basic dye and organic acid | Aizen Spilon Violet C-RH*1 | | | 5.0 | | | | | | | |
| | | Aizen Spilon Yellow C-2GH*1 | | | | | | | | 5.0 | | |
| | | Aizen Spilon Yellow C-GNH*1 | 5.0 | | | | | | | | | 5.0 |
| | | Valifast Yellow 1110*2 | | 6.0 | | | | | | | | |
| | | Aizen Spilon Red C-GH*1 | 10.0 | | | | | | | 20.0 | | 10.0 |
| | | Valifast Red 1360*2 | | 8.0 | | | | | | | | |
| | | Aizen S.B.N. Blue 701*1 | | | 10.0 | | | | 10.0 | | | |
| | | Aizen Spilon Blue C-RH*1 | | | | 15.0 | | | | | | |
| | Other alcohol-soluble dyes | Aizen S.B.N. Yellow 530*1 | | | | | | 5.0 | | | | |
| | | Aizen S.P.T. Red 533*1 | | | | | | 10.0 | | | | |
| | | Valifast Blue 1603*2 | | | | | 15.0 | | | | | |
| | | Savinyl Blue GLS*3 | | | | | 15.0 | | 5.0 | | | |
| Solvent | | Benzyl alcohol | 12.0 | 10.0 | 8.0 | 8.0 | 4.0 | 12.0 | 8.0 | 11.0 | 11.0 | 12.0 |
| | | 2-Phenoxyethanol | 45.5 | 42.5 | 52.2 | 43.2 | 57.0 | 45.5 | 52.2 | 40.0 | 40.0 | 45.5 |
| | | Tripropylene glycol n-butyl ether | | 5.0 | | 5.0 | | | | | | |
| | | Dipropylene glycol | | | 5.0 | 5.0 | | | 5.0 | | | |
| Resin | Butyral resin | Denka Butyral #2000-L*4 | | 2.0 | | | | | | | | |
| | | S-leck B BL-1*5 | 2.0 | | | 2.5 | | 2.0 | | 2.0 | 2.0 | |
| | | S-leck B BX-L*5 | | | 3.0 | | 6.0 | | 3.0 | | | |
| | Other resins | Synthetic Resin SK*6 | 15.0 | 15.0 | 5.5 | | | 15.0 | 5.5 | 18.0 | 33.0 | 17.0 |
| | | YP90L*7 | | | | 10.0 | | | | | | |
| | | PVP K90*8 | | 0.5 | 0.3 | | | | 0.3 | 1.0 | 1.0 | |
| | | PVP K120*8 | 0.5 | | | 0.3 | | 0.5 | | | | 0.5 |
| Lubricant | | Oleic acid | | 3.0 | 3.0 | 3.0 | 3.0 | | 3.0 | 3.0 | 3.0 | |
| Total | | | 100.0 | 100.0 | 100.0 | 100.0 | 100.0 | 100.0 | 100.0 | 100.0 | 100.0 | 100.0 |

| | | | | | | | | | | | | |
|---|---|---|---|---|---|---|---|---|---|---|---|---|
| *1: manufactured by Hodogaya Chemical Co., Ltd. *2: manufactured by Orient Chemical Industries, Ltd. *3: manufactured by Clariant Co., Ltd. *4: manufactured by Denki Kagaku Kogyo Kabushiki Kaisha *5: manufactured by Sekisui Chemical Co., Ltd. *6: manufactured by ISP Co., Ltd. *7: manufactured by Yasuhara Chemical Co., Ltd. *8: manufactured by BASF Co., Ltd. | | | | | | | | | | | | |

The respective oil-based ink compositions prepared by the process described above were filled into a refill having a polypropylene tube and a stainless tip (a ball is made of hard metal and has a diameter of 0.7 mm), and this was then incorporated into a commercially available barrel of SA-R manufactured by Mitsubishi Pencil Kabushiki Kaisha and assembled into a ballpoint pen. These refills or ballpoint pens were used to carry out the following tests.

### 1) Test of stability with the passage of time (forced deterioration test)

The fifteen refills described above per each ink were stored for 3 months in a high temperature and high humidity bath of 50°C and 80 % RH, and each 5 refills were taken out every month and left to cool down to room temperature. Then, they were used for writing spirals to inspect a writing property according to the following criteria:
⊚: writable as well as before the test
○: a little change observed as compared with before the test
Δ: starving is caused
□: starving is heavy
×: incapable of writing

### 2) Drawn line intensity

The five ballpoint pens were used for writing under the conditions of a load of 200 g, a writing angle of 70° and a writing speed of 4.5 m/minute to observe intensity of the resulting lines with eyes:
○: suitable intensity
×: weak

### 3) Drawn line fastness (alcohol resistance test)

A slip of paper cut out from the paper involving the drawn lines obtained in 2) described above was immersed in ethanol for a whole day and night and taken out, and it was dried and then observed a state of the drawn lines with eyes:
○: firm drawn lines can be observed
Δ: faint drawn lines remain
×: drawn lines eluted and can not be observed

The evaluation results thereof are shown in Table 2.

**Table 2**

| | | Test of stability with the passage of time | | | Drawn line intensity | Drawn line fastness |
|---|---|---|---|---|---|---|
| | | 1M | 2M | 3M | | |
| Example | 1 | ⊚ | ⊚ | ⊚ | ○ | ○ |
| | 2 | ⊚ | ⊚ | ⊚ | ○ | ○ |
| | 3 | ⊚ | ⊚ | ⊚ | ○ | ○ |
| | 4 | ⊚ | ⊚ | ⊚ | ○ | ○ |
| Comparative Example | 1 | Δ | □ | × | ○ | ○ |
| | 2 | ○ | ○ | Δ | ○ | ○ |
| | 3 | ○ | □ | × | ○ | ○ |
| | 4 | ⊚ | ⊚ | ⊚ | ○ | × |
| | 5 | ⊚ | ⊚ | ⊚ | × | ○ |
| | 6 | × | × | × | ○ | ○ |

As apparent from the results shown above, the oil-based ink compositions of a chromatic color for a ballpoint pen according to the present invention are excellent in stability with the passage of time even when the butyral resin is contained therein as a pigment dispersant and viscosity-controlling agent.

### Industrial Applicability

The oil-based ink composition of the present invention is an ink composition of a chromatic color which is excellent in stability with the passage of time and suited to felt-tip pens, marking pens and stamps as well as ballpoint pens.

## Claims

1. An oil-based ink composition of a chromatic color comprising at least a halochromic dye of a basic dye and an organic acid, an organic pigment, a butyral resin and an organic solvent.

2. A ballpoint pen **characterized by** filling an ink reservoir with the oil-based ink composition of a chromatic color as described in claim 1.

## Patentansprüche

1. Tintenzusammensetzung aus einer chromatischen Farbe auf Ölbasis, aufweisend zumindest einen halochromen Farbstoff eines basischen Farbstoffes und einer organischen Säure, ein organisches Pigment, ein Butyralharz und ein organisches Lösungsmittel.

2. Kugelschreiber, **dadurch gekennzeichnet, dass** ein Tintenreservoir mit einer wie in Anspruch 1 beschriebenen Tintenzusammensetzung einer chromatischen Farbe auf Ölbasis gefüllt ist.

## Revendications

1. Composition d'encre à base d'huile d'une couleur chromatique comprenant au moins un colorant halo-chromique d'un colorant de base et d'un acide organique, un pigment organique, une résine de butyral et un solvant organique.

2. Stylo à bille, **caractérisé par** le remplissage d'un réservoir d'encre avec la composition d'encre à base d'huile d'une couleur chromatique selon la revendication 1.
